(19) **Europäisches Patentamt / European Patent Office / Office européen des brevets**

(11) **EP 1 173 518 B1**

(12) **FASCICULE DE BREVET EUROPEEN**

(45) Date de publication et mention de la délivrance du brevet:
**17.01.2007 Bulletin 2007/03**

(21) Numéro de dépôt: **00917162.0**

(22) Date de dépôt: **07.04.2000**

(51) Int Cl.:
*C08L 83/04* (2006.01)    *C09K 3/10* (2006.01)

(86) Numéro de dépôt international:
**PCT/FR2000/000897**

(87) Numéro de publication internationale:
**WO 2000/060011 (12.10.2000 Gazette 2000/41)**

(54) **COMPOSITION ELASTOMERE SILICONE NON COULANTE, RETICULABLE PAR POLYADDITION, ET SES APPLICATIONS DANS LA FABRICATION DE JOINTS IN SITU AINSI QU'A TITRE DE COLLE NOTAMMENT POUR SELLERIE**

DURCH ADDITION VERNETZBARE NICHT-FLIESSFÄHIGE SILOXANZUSAMMENSETZUNG UND SEINE VERWENDUNG ZUR HERSTELLUNG VON IN SITU HERGESTELLTEN DICHTUNGEN UND ALS KLEBSTOFF FÜR SATTEL

NON-DRIP SILICONE ELASTOMER COMPOSITION, CROSSLINKABLE BY POLYADDITION, AND ITS USES FOR MAKING JOINTS IN SITU AS ADHESIVE IN PARTICULAR IN SADDLERY

(84) Etats contractants désignés:
**AT BE CH CY DE DK ES FI FR GB GR IE IT LI LU MC NL PT SE**

(30) Priorité: **07.04.1999 FR 9904612**

(43) Date de publication de la demande:
**23.01.2002 Bulletin 2002/04**

(73) Titulaire: **RHODIA CHIMIE**
**92100 Boulogne Billancourt (FR)**

(72) Inventeurs:
• **BARRANDON, Georges**
**F-69440 Mornant (FR)**
• **HOWE, Fabienne**
**F-69300 Caluire (FR)**

• **LOUBET, Olivier**
**F-69003 Lyon (FR)**
• **MOULIN, Bernard**
**F-69530 Brignais (FR)**
• **POUCHELON, Alain**
**F-69330 Meyzieu (FR)**

(74) Mandataire: **Fleurance, Raphaël et al**
**Cabinet Plasseraud**
**27, rue de la Villette**
**69003 Lyon (FR)**

(56) Documents cités:
| | |
|---|---|
| **EP-A- 0 124 235** | **EP-A- 0 279 414** |
| **EP-A- 0 487 079** | **EP-A- 0 618 271** |
| **EP-A- 0 686 669** | **FR-A- 2 316 286** |
| **GB-A- 754 164** | |

## Description

## DOMAINE TECHNIQUE

Le domaine général de l'invention est celui des compositions élastomères silicones vulcanisables à froid ou à chaud, par polyaddition, les compositions du type bi-composants polyaddition (RTV 2) voire bi-composants polyaddition à chaud (EVF2) étant plus particulièrement concernées.

La présente invention a donc pour objet l'utilisation d'au moins une résine fluorée comme agent thixotropant dans une composition élastomère silicone, auto-adhérente et réticulable par polyaddition.

La présente invention vise également l'application de cette composition élastomère non coulante, dans la fabrication de joints in situ tels que des joints flués, des joints profilés sur pièce et des joints injectés, ainsi que les applications dé cette composition non coulante dans l'assemblage par collage notamment de pièces de nature textile (e.g. sellerie).

## ART ANTERIEUR

Dans ces applications, il convient de disposer d'une composition élastomère réticulable, dotée de propriétés rhéologiques telles qu'elle puisse être aisément à mise en forme et/ou applicable sur des substrats à assembler et/ou à jointer (bonne fluidité), d'une part, et telle qu'elle soit apte à conserver la forme qu'on lui a donné au moins pendant le temps nécessaire à la réticulation qui permet de fixer définitivement la mémoire de la forme visée. On peut qualifier les pâtes de silicone élastomère réticulable dans cet état rhéologique, de non coulantes. Un tel comportement rhéologique non coulant est particulièrement bienvenu dans les applications de formation de joints in situ, de moulage, d'estampage/ tampographie et de collage. Il est important en effet dans ces dernières que la composition élastomère ne s'écoule pas dans les interstices. Dans le cas de pièces à coller en textile, cela permet d'éviter une imprégnation trop importante du tissu par la colle.

Pour tenter vainement d'atteindre ces caractéristiques rhéologiques non coulantes, il était envisagé jusqu'alors d'utiliser des thixotropants classiques permettant d'épaissir, dans une juste mesure, les compositions élastomères silicones, sans affecter pour autant leur malléabilité, leur fluidité nécessaire à leur manipulation et à leur mise en forme. Parmi les thixotropants classiques utilisables, on peut citer les systèmes à base d'amine (chaîne polymère de préférence silicone greffé par des fonctions amines primaires ou amines secondaires) ou de polyglycols.

Force est de constater que ces thixotropants classiques n'ont pas permis jusqu'à maintenant d'épaissir de manière satisfaisante toutes les formulations silicones polyaddition pour les rendre non coulantes, et ouvrir ainsi d'intéressantes perspectives dans des applications pour lesquelles cette caractéristique est fondamentale.

Les compositions polyorganosiloxaniques (POS) concernées sont des RTV ou des LSR de polyaddition. Les expressions RTV, LSR sont bien connus de l'homme du métier: RTV est l'abréviation de "Room Température Vulcanising" et LSR est l'abréviation de "Liquid Silicone Rubber".

Il est connu d'épaissir les élastomères vulcanisables à chaud (EVC) au peroxyde, à l'aide de PolyTétraFluoroEthylène (PTFE) commercialisée sous la marque téflon®.

C'est ainsi que la demande de brevet japonais n° 60036171 décrit un matériau élastomère comprenant de 0,01 à 50% en poids de PTFE en poudre. Le matériau élastomère peut être, notamment, du silicone contenant un agent de vulcanisation tel qu'un peroxyde organique ainsi qu'éventuellement des charges pulvérulentes du type silice noir de carbone talc. L'incorporation de téflon® est présenté comme améliorant la stabilité dimensionnelle et la longévité de l'élastomère.

La demande de brevet européen n° 618 271 décrit une composition silicone élastomère comprenant :

(a) 100 parties en poids d'un POS du type SiVi,
(b) 0,01 - 50 parties en poids d'une poudre de résine fluorée (PTFE),
(c) 0,01 - 40 parties en poids d'un POS perfluoré,
(d) 10 à 100 parties en poids d'une poudre de silice renforçante et à une surface spécifique d'au moins 50 m$^2$/g,
(e) un agent de réticulation par exemple de type peroxyde.

Cette composition aurait des propriétés physiques améliorées à l'état réticulé et serait plus facilement obtenable que les compositions de l'art antérieur contenant des poudres de résine fluorées.

La demande de brevet japonais n° 68 00 3980 décrit une composition élastomère silicone comprenant un POS à fonction Si-alcényle (Si-Vinyle) réticulable par voie radicalaire à l'aide d'un peroxyde organique, la composition comportant également une pâte consistant en 20% de poudre de PTFE dispersée dans un liquide formé par une huile silicone, dans laquelle est dissoute une résine copolymère silicone. Le téflon® est ajouté au mélange résine + huile diorganosiloxane afin d'obtenir une pâte semi translucide. Apparemment l'élastomère silicone ainsi formulé aurait d'excellentes caractéristiques de résistance à la traction, de résistance thermique et de résistance vis-à-vis des huiles et des solvants.

La demande de brevet japonais n° 58194949 concerne une composition élastomère silicone EVC comprenant un POS du type PDMS, une charge pulvérulente, des esters d'acide gras en $C_8$ et plus, des amides d'acide gras en $C_8$ ou plus ou de la paraffine, ainsi que 0,01 à 5 parties en poids de résine PTFE en poudre, 100 parties en poids de POS, 10 à 500 parties en poids de charge (silice pyrogénée).

Le rôle du PTFE dans cette composition élastomère silicone de type EVC polycondensation, n'est pas celui d'un thixotropant.

## BREF EXPOSE DE L'INVENTION

Dans un tel état de la technique, l'un des objectifs essentiels de la présente invention, est de fournir une nouvelle utilisation d'une résine fluorée une composition élastomère silicone, réticulable par polyaddition, pour conférer à cette composition un comportement rhéologique non coulant.

Un autre objectif essentiel de la présente invention est de fournir une nouvelle utilisation d'une résine fluorée dans une composition silicone élastomère réticulable par polyaddition et en particulier autoadhérente.

Un autre objectif essentiel de la présente invention est de fournir une nouvelle utilisation d'une résine fluorée dans une composition silicone élastomère réticulable par polyaddition, pour la rendre non coulante, en particulier auto-adhérente, susceptible d'être facilement mise en forme et apte à conserver la forme ainsi façonnée, au moins pendant le temps nécessaire à la réticulation.

Un autre objectif essentiel de l'invention est de fournir une nouvelle utilisation d'une résine fluorée dans une composition élastomère silicone, type polyaddition, pour la rendre non coulante et en particulier autoadhérente et qui puisse être obtenue de manière simple et économique.

Un autre objectif essentiel de la présente invention est de fournir un procédé d'application d'une composition élastomère silicone réticulable et non coulante et en particulier autoadhérente, dans la fabrication de joints in situ tels que des joints flués, des joints profilés en place et des joints injectés.

Un autre objectif essentiel de la présente invention est de fournir un procédé d'application d'une composition élastomère silicone, réticulable par polyaddition en particulier non coulante et autoadhérente dans le moulage et dans l'estampage (tampographie).

Un autre objectif essentiel de la présente invention est de fournir un procédé d'application de la composition élastomère silicone réticulable par polyaddition, non coulante en particulier autoadhérente, dans le collage de matériaux fibreux par exemple de textiles, notamment dans la sellerie.

Un autre objectif essentiel de la présente invention est de fournir des joints en élastomère silicone réticulé, obtenu in situ, par mise en forme et réticulation d'un précurseur élastomère silicone réticulable non coulant, et en particulier autoadhérent.

Ces objectifs, parmi d'autres, sont atteints par la présente invention qui concerne, en premier lieu, l'utilisation d'au moins une résine fluorée à base de polyfluorooléfine de préférence à base de polyfluoroéthylène (PFE) et plus préférentiellement encore à base de polytétrafluoroéthylène (PTFE), à titre d'agent thixotropant, dans une composition élastomère silicone, réticulable par polyaddition, du type de celles comprenant des polyorganosiloxanes (POS) porteurs de motifs $\equiv$Si-alcényle en $C_2$-$C_6$ et de motifs $\equiv$Si-H, pour conférer à cette commposition un comportement visco-élastique non coulant.

Cette mise en oeuvre originale et avantageuse de résine fluorée, de préférence de PFE et plus préférentiellement encore de PTFE, permet de contrôler la rhéologie des compositions élastomères silicones réticulables par polyaddition et, en particulier, permet de conférer à ces dernières un comportement viscoélastique non coulant. Ainsi, il est du mérite des inventeurs d'avoir mis en évidence que les résines fluorées, de préférence les PFE et plus préférentiellement encore le PTFE (téflon®), sont un moyen pratique et efficace pour épaissir les formulations silicones réticulables par polyaddition. Cette fonctionnalité intéressante des résines fluorées, de préférence PFE et plus préférentiellement encore du téflon®, n'avait jusqu'alors pas été divulguée, ni même suggérée dans un tel contexte et à de telles fins.

La mise à jour de ce nouvel additif thixotropant pour élastomère silicone polyaddition traditionnellement fluide, est particulièrement appréciée dans les applications en moulage, estampage, tampographie, réalisation de joints in situ et collage notamment de textile.

Au sens de l'invention, on entend par "résine fluorée" tout polymère fluoré contenant des liaisons C-F tels que par exemple :

- polyfluorure de vinyle,
- polyfluorure de vinylidène,
- polytétrafluoroéthylène (PTFE),
- polymonochlorotrifluoroéthylène,

- polyfluoropolyéthers,
- copolymère d'éthylène et de tétrafluoroéthylène,
- copolymère de tétrafluoroéthylène et de perfluorovinyléther,
- copolymère d'éthylèneperfluoro et de propylèneperfluoro, Cf. Encyclopedia of Chemical Technology - 4ème Edition de 1994, vol. 11 - p. 621-721.

Les POS fluorés exclus de la composition selon l'invention sont ceux qui sont substitués par au moins un atome de fluor par molécule.

## DESCRIPTION DBTAILLEE DE L'INVENTION

Suivant une caractéristique, préférée de l'invention, les POS compris dans la composition sont constitués de motifs siloxyles

$$R_nSiO_{\frac{4-n}{2}} \qquad (I)$$

et/ou de motifs siloxyles de formule :

$$Z_xR_ySiO_{\frac{4-x-y}{2}} \qquad (II)$$

formules dans lesquelles les divers symboles ont la signification suivante :

- les symboles R, identiques ou différents, représentent chacun un groupement de nature hydrocarbonée non hydrolysable, ce radical pouvant être :

  * un radical alkyle ayant de 1 à 5 atomes de carbone et pouvant comporter de 1 à 6 atomes de chlore,
  * des radicaux cycloalkyle ayant de 3 à 8 atomes de carbone et pouvant contenir de 1 à 4 atomes de chlore,
  * des radicaux aryles, alkylaryle ayant de 6 à 8 atomes de carbone et pouvant contenir de 1 à 4 atomes de chlore,
  * des radicaux cyanoalkyle ayant de 3 à 4 atomes de carbone ; les groupes méthyle ; éthyle ; propyle ; isopropyle ; butyle ; isobutyle ; n-pentyle ; t-butyle ; chlorométhyle ; dichlorométhyle ; $\alpha$-chloroéthyle ; $\alpha,\beta$-dichloroéthyle ; $\beta$-cyanoéthyle ; $\gamma$-cyanopropyle ; phényle ; p-chlorophényle ; m-chlorophényle ; dichloro-3,5 phényle ; trichlorophényle ; tétrachlorophényle ; o-,p- ou m-totyle ; xylyle comme diméthyl-2, 3 phényle, diméthyl-3,4 phényle, étant préférés ;

  les radicaux méthyle et phényle étant particulièrement préférés ;
- les symboles Z, représentant chacun un atome d'hydrogène ou un groupe alkényle en $C_2$-$C_6$ (de préférence vinyle) ;
- n = un nombre entier égal à 0, 1, 2 ou 3 ;
- x = un nombre entier égal à 0, 1, 2 ou 3 ;
- y = un nombre entier égal à 0, 1, ou 2 ;
- la somme x + y se situe dans l'intervalle allant de 1 à 3.

La nature du polyorganosiloxane et donc les rapports entre les motifs siloxyles (I) et (II) et la répartition de ceux-ci, sont comme on le sait, choisis en fonction du traitement de réticulation qui sera effectué sur là composition durcissable en vue de sa transformation en élastomère.

Comme exemples de motifs siloxyles de formule (II) constituant le POS, on peut citer : vinyldiméthylsiloxyle, vinylphénylméthylsiloxyle, vinylméthylsiloxyle et vinylsiloxyle.

Les motifs diméthylsiloxyle méthylphénylsiloyle diphénylsiloxyle, méthylsiloxyle et phénylsiloxyle sont des exemples de motifs siloxyle de formule (I) du POS.

Des exemples de POS sont des composés linéaires et cycliques comme les diméthylpolysiloxanes à extrémités diméthylvinylsilyle,

les copolymères (méthylvinyle) (diméthyl)polysiloxanes à extrémités triméthylsilyles,
les copolymères(méthylvinyle)(diméthyle)polysiloxanes à extrémités diméthylvinylsilyles, les méthylvinyl- polysiloxanes cycliques.

Les compositions polyorganosiloxanes peuvent être bicomposantes ou monocomposantes. Elles réticulent à température ambiante ou à la chaleur par des réactions de polyaddition, essentiellement par réaction de groupements hydrogéno-silylés sur des groupements alkénylsilylés, en présence d'un catalyseur métallique, généralement à base de platine, sont décrites par exemple dans les brevets US-A-3 220 972, 3 284 406, 3 436 366, 3 697 473 et 4 340 709. Les polyorganosiloxanes entrant dans ces compositions sont en général constitués par des couples à base, d'une part, d'un polysiloxane linéaire, ramifié ou réticulé constitué de motifs (II) dans lesquels le reste Z représente un groupement alkényle en $C_2$-$C_6$ (de préférence vinyle), et où x est au moins égal à 1, éventuellement associés à des motifs (I), et d'autre part, d'un hydrogénopolysiloxane linéaire, ramifié ou réticulé constitué de motifs (II) dans lesquels le reste Z représente alors un atome d'hydrogène et où x est au moins égal à 1, éventuellement associés à des motifs (I).

Plus précisément, la composition selon l'invention comprend outre l'agent thixotropant à base de résine fluorée, de préférence PFE et plus préférentiellement encore PTFE :

A. au moins un polyorganosiloxane présentant, par molécule, au moins deux groupes alcényles, en $C_2$-$C_6$ liés au silicium,
B. au moins un polyorganosiloxane présentant, par molécule, au moins deux atomes d'hydrogène liés au silicium,
C. une quantité catalytiquement efficace d'au moins un catalyseur, composé d'au moins un métal appartenant au groupe du platine,
D. éventuellement au moins une résine POS, de préférence porteuse de radicaux Z = alcényle en $C_2$-$C_6$ ou H lié au silicium,
E. éventuellement un promoteur d'adhérence, de préférence tertiaire, et plus préférentiellement encore consistant en :

E.1. au moins un organosilane alcoxylé contenant, par molécule, au moins un groupe alcényle en C2-C6,
E.2. au moins un composé organosilicié comprenant au moins un radical époxy,
E.3. au moins un chélate de métal M et/ou un alcoxyde métallique de formule générale : M (OJ) n, avec n = valence de M et J : alkyle linéaire ou ramifié en $C_1$-$C_8$, M étant choisi dans le groupe formé par : Ti, Zr, Ge, Li, Mn, Fe, Al et Mg.,

F. éventuellement, une charge minérale, renforçante ou non,
G. Un polyorganosiloxane qualifié d'allongeur et présentant des motifs siloxyles terminaux à fonctions hydrogéno,
H. éventuellement un neutralisant,
I. éventuellement un inhibiteur de réticulation et/ou autre(s) additif(s) en usage dans ce type de compositions,
J. et éventuellement des charges microsphériques creuses inorganiques expansées ou expansables.

Les compositions selon l'invention peuvent être de type RTV ou LSR. A titre indicatif, les compositions silicone RTV élastomères réticulables ont une viscosité $\eta_{RTV}$ à 25°C, telle que $\eta_{RTV} \leq 100\,000$ mPa.s et les compositions silicones LSR élastomères réticulables ont une viscosité $\eta_{LSR}$, telle que

$$100\,000 < \eta_{LSR} \leq 1\,000\,000 \text{ mPa.s.}$$

S'agissant des POS polyaddition mis en oeuvre dans les compositions selon l'invention (POS A - voire D), on en distingue plusieurs classes qui se différencient par leur viscosité et qui définissent des compositions élastomères silicones polyaddition de type RTV ou LSR.

Dans le cas des compositions RTV réticulant par des réactions de polyaddition, le (ou les) constituant(s) polyorganosiloxane(s) porteur(s) de groupements alkénylsilylés présentent avantageusement une viscosité $\eta$ à 25°C :

$$2\,500 \leq \eta \leq 100\,000 \text{ mPa.s.}$$

Dans le cas des compositions LSR réticulant par des réactions de polyaddition, le(ou les) constituant(s) polyorganosiloxane(s) porteur(s) de groupements alkénylsilylés ont, par exemple une viscosité $\eta'$ à 25°C :

$$10\ 000 \leq \eta' \leq 200\ 000\ \text{mPa.s.}$$

Dans les cas des compositions polyorganosiloxanes RTV ou LSR, le (ou les) constituant(s) polyorganosiloxane(s) B porteur(s) de groupements hydrogéno-silylés a(ont) généralement une viscosité à 25°C au plus égale à 10 000 mPa.s et, de préférence, comprise entre 5 et 1000 mPa.s.

Toutes les viscosités dont il est question dans le présent exposé correspondent à une grandeur de viscosité dynamique à 25°C mesurée, de manière connue en soi, à un gradient de vitesse de cisaillement représentatif de son utilisation.

Selon une variante, il est envisageable que la composition selon l'invention comprenne des mélanges de POS différents par leur nature et/ou par leur viscosité.

Concernant le polyorganohydrogénosiloxane B, il est avantageusement choisi parmi les homopolymères et les copolymères linéaires, cycliques ou en réseau présentant en moyenne, par molécule, de préférence au moins 3 atomes d'hydrogène liés à des atomes de silicium différents et dont les radicaux organiques liés aux atomes de silicium sont choisis parmi les radicaux méthyle, éthyle ; 60% molaire au moins de ces radicaux (et de préférence la totalité de ces radicaux) étant des radicaux méthyle.

Selon une disposition avantageuse, le POS (B) est utilisé en quantité telle que le rapport molaire des fonctions hydrures du POS (B) sur les groupes vinyles POS (A) soient compris entre 1,1 et 4.

Des exemples de motifs siloxyles composant le POS (B) sont $H(CH_3)2SiO_{1/2}$, $H(CH_3)SiO_{2/2}$, $H(C_6H_5)SiO_{2/2}$.

A titre d'exemples de POS (B), on peut citer :

- Les diméthylpolysiloxanes à extrémités hydrogénodiméthylsilyles,
- Les copolymères à motifs (diméthyle)-(hydrogénométhyle) polysiloxanes à extrémités triméthylsilyles,
- Les copolymères à motifs (diméthyle)(hydrogénométhyle) polysiloxanes à extrémités hydrogénodiméthylsilyles,
- Les (hydrogénométhyles)polysiloxanes à extrémités triméthylsilyles,
- Les (hydrogénométhyles)polysiloxanes cycliques.

Les catalyseurs (C) sont également bien connus. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 725 334, US-A-3 377 432 et US-A-3 814 730. Le catalyseur généralement préféré est à base de platine. Dans ce cas, la quantité pondérale de catalyseur (C) calculée en poids de platine-métal, est généralement comprise entre 2 et 400 ppm, de préférence entre 5 et 50 ppm, basée sur le poids total de la composition.

La résine (D) est porteuse de motifs siloxyle alcènylés de préférence vinylés de type $M^{vi}$ et $D^{vi}$. Les substituants organiques des motifs siloxyle MDT et/ou Q de ces résines sont, par exemple, des radicaux méthyles isopropyltertiobutyle, n-hexyle ou phényle.

Ces résines silicone sont des POS ramifiés bien connus, dont les procédés de préparation sont décrits dans de très nombreux brevets.

Comme exemples de résines utilisables, on peut citer les résines MQ, MDQ, TD et MDT. Plus précisément, il peut s'agir en pratique d'une résine de type M $M^{vi}$ D $D^{vi}$ Q. Ces résines (D) peuvent être solides ou liquides à température ambiante. Elles peuvent être incorporées dans des émulsions aqueuses ou bien être en solution dans un solvant organique ou une huile silicone. Elles peuvent également se présenter sous forme d'émulsions aqueuses. Des émulsions aqueuses de résine silicone utilisables sont, par exemple, décrites dans les brevets US-A-4 028 339, US-A-4 052 331, US-A-4 056 492, US-A-4 525 502 et US-A-4 717 599 cités comme références.

Le promoteur d'adhérence E, de préférence tertiaire, est du type de celui décrit dans le brevet français n° 2 719 598.

Il est à noter que dans le cas où la composition comprend un allongeur G, alors l'organosilane alcoxylé E.1 comprend, de préférence, au moins un groupe alcényle en $C_3$-$C_6$ par molécule.

En ce qui concerne le composé E.3, il peut consister dans, ou comprendre, un chélate métallique. Le métal M choisi peut comporter ainsi un ou plusieurs ligands tels que ceux dérivés notamment d'une β-dicétone, comme par exemple l'acétylacétone. Le composé E.3 peut consister encore dans, ou comprendre, un alcoxyde métallique ayant la formule M(OJ), définie supra où les radicaux alcoxy sont par exemple les radicaux n-propoxy et n-butoxy. A noter que, dans cette formule, un ou plusieurs radicaux alcoxy OJ peuvent être remplacés par un ou plusieurs ligands constitutifs d'un chélate, comme par exemple un ligand acétylacétonate.

Les composés E.3 préférés sont ceux dans lesquels le métal M est choisi dans la liste suivante : Ti, Zr, Ge, Mn, Al.

On précisera que le titane est plus particulièrement préféré.

Des exemples concrets de composés E.3. qui conviennent bien, sont ceux dans la structure desquels le métal M est choisi dans la liste : Ti, Zr, Ge, Mn et Al et est associé :

- S'agissant d'un chélate : à des ligands de type acétylacétonate,
- S'agissant d'un alcoxyde : à des radicaux n-propoxy ou n-butoxy.

La charge facultative F mise en oeuvre peut être avantageusement une charge siliceuse renforçante F.1 traitée in situ par un agent de compatibilisatioin, de préférence de type hexaméthyldisilazane HMDZ, en présence du POS (A).

Par traitement in situ de la charge siliceuse, on entend la mise en présence de la charge et de l'agent de compatibilisation avec au moins une portion d'huile silicone polyorganosiloxane (A). De manière particulièrement préférée, cela consiste essentiellement à introduire de l'agent de compatibilisation (AC) en deux temps dans le milieu de préparation :

- d'une part, avant et/ou sensiblement simultanément à la mise en présence d'au moins une partie de l'huile silicone mise en oeuvre avec au moins une portion de la charge siliceuse utilisée, cette introduction d'AC (portion 1) s'opérant en une ou plusieurs fois et correspondant à une proportion inférieure ou égale à 8%, de préférence à 5% et, plus préférentiellement encore, à 3% en poids sec par rapport à la charge totale ;
- et d'autre part (portion 2), après cette mise en présence d'huile silicone/charge.

L'agent de compatibilisation de la portion (1) est ainsi choisi parmi des molécules qui satisfont à au moins deux critères :

- présenter une interaction forte avec la silice (liaisons hydrogène) et avec l'huile silicone environnante;
- être elles-mêmes ou leurs produits de dégradation, aisément évacuables du mélange final par chauffage sous vide ou sous courant gazeux.

Les composés de bas poids moléculaire sont donc préférés. L'agent de la portion (1) pourra être par exemple :

- Un silazane, de préférence un disilazane, ou leurs mélanges, l'hexaméthyldisilazane (HMDZ) étant préféré et pouvant être associé au divinyltétraméthyldisilazane
- un siloxane hydroxylé di- ou de préférence monofonctionnel,
- une amine telle que l'ammoniaque ou une alkylamine de bas poids moléculaire comme la diéthylamine,
- un acide organique de bas poids moléculaire comme les acides formique ou acétique,
- et est de préférence mis en oeuvre en présence d'eau.

les agents de compatibilisation de la portion (2) peuvent être choisis parmi les différents silazanes et disilazanes rencontrés ci-dessus, pris seuls ou en mélanges entre eux, de préférence parmi les disilazanes, l'hexaméthyldisilazane associé ou non au divinyltétraméthyldisilazane étant particulièrement préféré.

Ce traitement in situ de silice par l'HMDZ est décrit en détail dans la demande de brevet WO-A-98/58997. Dans le cas où pareil traitement conduit à un pH basique, on peut ajouter dans la dispersion un neutralisant (H) tel que, par exemple, un acide faible (acide acétique ou phosphorique e.g.) ou une charge de silice telle que le quartz broyé.

La charge F utilisable peut également être une charge renforçante F.2 et, de préférence, une charge siliceuse.

Les charges siliceuses renforçantes F.2 peuvent être avantageusement prétraitées, e.g. par des chlorosilanes, des cyclosiloxanes ou de 1'HMDZ, ou d'autres composés organosiliciques habituellement employés pour cet usage, tels que des organochlorosilanes, des diorganocyclopolysiloxanes, des heaorganodisiloxanes, des hexorganodisilazanes ou des diorganocyclopolysilazanes (brevets français FR-A-1 126 884, FR-A-1 136 885, FR-A-1 236 505, brevet anglais GB-A-1 024 234).

Les charges siliceuses renforçantes F.1 et F.2 sont choisies parmi les silices colloïdales, les poudres de silice de combustion et de précipitation ou leurs mélanges.

Ces poudres siliceuses présentent une taille moyenne de particule généralement voisine ou inférieure à 0.1 $\mu$m et une surface spécifique BET supérieure à 50 m$^2$/g, de préférence comprise entre 50 et 400 m$^2$/g, notamment entre 90 et 350 m$^2$/g.

L'utilisation d'une charge non renforçante ou de bourrage F.3. n'est pas exclue en complément.

Parmi les charges semi-renforçantes ou de bourrage F.3 de complément, on peut citer notamment les terres de diatomées, le quartz broyé et le zircone broyé.

D'autres charges complémentaires semi-renforçantes ou de bourrage sont, par exemple, le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte.. Ces charges complémentaires ont une granulométrie généralement comprise entre 0,1 et 300 $\mu$m et une surface BET inférieure à 100 m$^2$/g.

Ces charges F.1, F.2, F.3 pourront être présentes à raison de 5 à 30%, de préférence de 15 à 25% pour les charges renforçantes et de 5 à 40%, de préférence de 10 à 30% pour les charges semi-renforçantes ou de bourrage, par rapport à la composition totale sans les microsphères.

Le POS allongeur G facultatif peut être un POS présentant des motifs siloxyles terminaux de type : $HR^0_2SiO_{1/2}$ Avec R° identique ou différent entre eux et correspondant à un groupement alkyle ou linéaire ou ramifié en $C_1$-$C_6$ et/ou un aryle substitué ou non, R° étant préférentiellement $CH_3$.

Outre ces motifs terminaux, ce POS (G) est, par ailleurs, un polydiorganosiloxane, de préférence un polydiméthylsiloxane.

A titre d'exemples de POS (G) on peut citer le poly(diméthylsiloy)-$\alpha,\omega$-(diméthylhydrogénosiloxy)siloxane. En pratique, ce PDMS $\alpha,\omega$-hydrogéné peut être un produit commercial tel que le RHODORSIL® 620 H2 de la Société RHODIA CHIMIE.

S'agissant de l'éventuel inhibiteur de réticulation I, on peut mettre en oeuvre au moins un ralentisseur de réaction d'addition choisi parmi les composés suivants :

- POS substitué par au moins un alcényle (de préférence un vinyle) pouvant se présenter éventuellement sous forme cyclique ; le tétraméthylvinyltétrasiloxane étant particulièrement préféré ;
- la pyridine,
- les phosphines et les phosphites organiques,
- les amides insaturés,
- les maléates alkylés,
- et les alcools acétyléniques.

Ces alcools acétyléniques, (Cf. FR-B-1 528 464 et Fr-A-2 372 874), qui font partie des bloqueurs thermiques de réaction d'hydrosilylation préférés, ont pour formule :

$$R'\text{-}(R'')C(OH)\text{-}C \equiv CH$$

formule dans laquelle,

- R' est un radical alkyle linéaire ou ramifié, ou un radical phényle ;
- R" est H ou un radical alkyle linéaire ou ramifié, ou un radical phényle ;
- Les radicaux R', R" et l'atome de carbone situé en $\alpha$ de la triple liaison pouvant éventuellement former un cycle;

le nombre total d'atomes de carbone contenu dans R' et R'' étant d'au moins 5, de préférence de 9 à 20.

Lesdits alcools sont, de préférence, choisis parmi ceux présentant un point d'ébullition supérieur à 250°C. On peut citer à titre d'exemples :

- L'éthynyl-1-cyclohexanol-1 ;
- Le méthyl-3 dodécyne-1o1-3 ;
- Le triméthyl-3,7,11 dodécyne-1 o1-3 ;
- Le diphényl-1,1 propyne-2 01-1 ;
- L'éthyl-3 éthyl-6 nonyne-1 o1-3 ;
- Le méthyl-2 butyne-3 01-2 ;
- Le méthyl-3 pentadécyne-1 01-3.

Ces alcools $\alpha$-acétyléniques sont des produits du commerce.

Un tel ralentisseur (I) est présent à raison de 3 000 ppm au maximum, de préférence à raison de 100 à 2000 pm par rapport au poids total des organopolysiloxanes (1) et (2).

Les charges microsphériques (J) sont de préférence des microsphères organiques expansables comportant, comme cela est connu en soi, une paroi polymère renfermant un liquide ou un gaz. On provoque l'expansion de ces microsphères en les chauffant au delà du point de ramollissement du polymère et à une température suffisante pour vaporiser le liquide ou dilater convenablement le gaz, lequel peut être par exemple un alcane tel que isobutane ou isopentane. La paroi peut consister, comme cela est connu en soi, en polymères ou copolymères, par exemple préparés à partir de monomères chlorure de vinyle, chlorure de vinylidène, acrylonitrile, méthacrylate de méthyl ou styrène ou mélanges de polymères et/ou copolymères, par exemple, notamment de copolymères acrylonitrile/méthacrylonitrile, copolymère acrylonitrile/chlorure de vinylidène. Voir notamment US-A-3 615 972.

On peut les incorporer dans la composition indifféremment à l'état expansé ou avant leur expansion, que l'on pourra induire, par chauffage approprié, lors de la réticulation de la composition.

Avant leur expansion, les microsphères auront de préférence un diamètre compris entre 3 et 50 μm, plus particulièrement entre 5 et 30 μm.

On recherchera également un diamètre après expansion (in situ ou d'origine) compris notamment entre 10 et 150, en particulier entre 20 et 100 μm.

Ces microsphères seront présentes notamment à raison de 1 à 30% en poids, de préférence de 2 à 10 % et plus préférentiellement de plus de 3 ou 4% en poids par rapport à la composition totale.

De manière connue en soi, la composition élastomère silicone peut être additionnée d'un ou plusieurs autres additif(s) classique(s) comme, par exemple, les colorants.

De préférence, l'agent thixotropant à base de résine polyfluoroéthylène, de préférence de PTFE se présente sous forme pulvérulente sèche ou en dispersion - de préférence aqueuse - incorporée à raison de 0,1 à 10%, de préférence 1 à 5% en poids sur sec par rapport à la matière sèche totale de la composition.

Selon une caractéristique préférée de l'invention, la composition possède une fluidité Matthis (FM) telle que:

$$FM < 1,0$$

de préférence

$$FM < 0,5$$

et plus préferentiellement encore

$$FM = 0.$$

La mesure Matthis est bien connue de l'hhomme de l'art.

Il s'agit d'un essai de fluage sur une paroi verticale de 300 mm où on note la distance parcourue par le produit pendant 1 minute.

L'essai est pratiqué sur un fluidimètre Matthis.

L'appareil est constitué d'une planchette avec une rainure au bout de laquelle se trouve une petite cavité hémisphérique ; la rainure est bordée d'une graduation millimétrique. On remplit la cavité hémisphérique du fluidimètre avec la pâte à évaluer et on en arase la surface.

Simultanément, on redresse l'appareil et on déclenche le chronomètre.

Lorsque une minute est écoulée, on remet l'appareil en position horizontale et on lit la distance parcourue par la pâte sur l'échelle graduée de l'appareil.

La lecture est effectuée en mm.

La fluidité est d'autant plus importante que la distance parcourue est grande.

Cette fluidité Matthis FM reflète bien le comportement rhéologique non coulant propre aux compositions selon l'invention.

Selon un autre de ses aspects, la présente invention est relative à l'utilisation d'une résine fluorée à titre d'agent thixotropant dans un système précurseur bicomposant de la composition silicone décrite supra. Un tel système précurseur se présente en deux parties $P_1$ et $P_2$ distinctes, destinées à être mélangées pour former la composition, l'une de ces parties $P_1$ ou $P_2$ comprenant le catalyseur (C ) et un ou plusieurs POS (A et/ou D) ou (B) porteurs d'une seule espèce de groupements de réticulation respectivement ≡Si-alcényle et ≡Si-H.

Une autre caractéristique de ce système précurseur dans le cas où il comprend du promoteur E, est que sa partie $P_1$ ou $P_2$ contenant le polyorganosiloxane (B) uniquement porteur de ≡Si-H, est exempte de composés (E.3) contenus dans le promoteur (E) et sa partie $P_1$ ou $P_2$ incluant le composé (E.1) du promoteur (E) ne comprend pas le catalyseur (C) ; la charge F.1 traitée in situ éventuellement présente, est avantageusement comprise dans la ou les parties $P_1$ ou $P_2$ qui contiennent le polyorganosiloxane A.

La détermination et l'optimisation de la composition des deux parties $P_1$ et $P_2$ pour éviter de mettre en présence dans l'une des parties des espèces susceptibles de réagir ensemble, font partie des capacités normales de l'homme du métier.

La viscosité des parties $P_1$ et $P_2$ et de leur mélange peut être ajustée en jouant sur les quantités des constituants et en choisissant les polyorganosiloxanes de viscosité différente.

A titre d'exemples de produit commercial pour le PTFE utilisable dans les compositions selon l'invention, on peut citer le téflon® 6C-N commercialisé par DUPONT DE NE-MOURS. Il s'agit d'une poudre ayant une granulométrie de 500 $\pm$ 150 $\mu$m. Il peut s'agir également de téflon® MP qui sont des poudres blanches de PTFE qui diffèrent des autres présentations du PTFE en granulé et en poudre fine, par la taille de leur particule qui est très petite puisqu'elle est de l'ordre de 2 à 20 $\mu$m. Ces poudres téflon® sont aussi accessibles en dispersion aqueuse.

## APPLICATION INDUSTRIELLE

Les compositions telles que définies ci-dessus (sans exclusion de celles comprenant des POS fluorés) peuvent être employées pour de multiples applications, comme le jointoiement dans l'Industrie (automobile et transport, électroménager, électrotechnique) et l'assemblage des matériaux les plus divers (métaux, matières plastiques, verre et céramique).

Pour ce qui est du jointoiement, elles conviennent plus spécialement pour la formation de joints "in-situ" utilisés dans l'industrie. Ces joints "in-situ" englobent plusieurs types, à savoir les joints "flués" également appelés joints écrasés, les joints profilés sur pièce (JPP) également appelés joints en forme et enfin les joints injectés.

Les joints "flués" sont formés à la suite de l'application d'un cordon thixotrope des compositions sur la zone de contact entre deux éléments puis l'autre élément est aussitôt appliqué sur le premier ; il en résulte un fluage du cordon avant qu'il ne soit transformé en élastomère par chauffage de l'ensemble. Une fois la composition silicone réticulée, la cohésion de l'élastomère assure alors l'assemblage et l'étanchéité.

Dans l'industrie automobile, ce type de joints s'adressera à des assemblages ne devant pas être couramment démontés (joints de boîtier de sortie d'eau...). dans l'électroménager, on peut citer l'assemblage de plaques de four, l'assemblage de plaques de cuisson vitrocéramiques et l'assemblage de fer à repasser.

Par rapport aux techniques d'étanchéité traditionnelles du type joint liège/élastomère prédécoupé, joint chaussé, joint torique, le joint "flué" à base de Compositions Silicone selon l'Invention ci-après dénommés CSI (étant précisé que, pour les applications, la CSI peut comprendre au moins un POS fluoré comportant au moins un fluor par molécule) permet une efficacité accrue de l'étanchéité, et cela notamment pour les trois groupes de raisons suivantes :

    1. Produit silicone performant :

        · Thixotrope,
        · Réticulation rapide, 1 minute à 150°C,
        · Adhérence élevée sur des matériaux les plus divers (matières plastiques, métaux, verres)
        · Long "pot life" du produit mélangé, 8 heures à température ambiante,
        · Haute tenue au vieillissement thermique,
        · Bonne résistance aux agressions chimiques (eau, huiles, liquides de refroidissement),
        · Comportement mécanique indifférent aux écarts de température (-70 à +250°C)
        · Etanchéité flexible absorbant les vibrations
        · Gain de poids par rapport aux joints traditionnels

    2. Possibilité d'automatisation offrant grâce à la thixotropie des CSI :

        · Une parfaite maîtrise de la dépose du cordon
        · Une mise en oeuvre très rapide
        · Une bonne reproductibilité

    3. Solution d'étanchéité pratique permettant dans certains cas :

        · La simplification du profil des pièces (pas d'usinage)
        · La réduction du nombre de points de serrage (forte adhérence des CSI).

Ces qualités techniques se complètent par des avantages économiques :

- Faible coût des essais de faisabilité,
- Matière première et mise en oeuvre moins coûteuses qu'un joint moulé ou prédécoupé (coût de l'étanchéité divisé par 5 à 10, hors amortissement du matériel de mise en oeuvre)
- Pas de stocks de joints, accompagnés de références multiples
- Pas de manipulation (manuelle ou robotisée) de joints souples

- Un seul produit et un seul équipement peuvent réaliser plusieurs profils différents de joint
- Contrôle d'étanchéité rapide par mise sous faible pression d'air quelques minutes après l'assemblage et le serrage des pièces.

Les joints "profilés sur pièce" (JPP) sont également obtenus à la suite de l'application d'un cordon pâteux des compositions sur la zone de contact entre deux éléments à assembler. Toutefois, après la dépose du cordon pâteux sur l'un des éléments on réticule par chauffage le cordon en élastomère puis on applique le deuxième élément sur le premier. Il en résulte qu'un tel assemblage est aisément démontable puisque l'élément qui est appliqué sur celui ayant reçu le joint, n'adhère pas à ce joint. Par ailleurs, le joint, par son caractère élastomérique, épouse les irrégularités des surfaces à jointoyer de ce fait, il est inutile d'usiner soigneusement les surfaces devant être mises en contact les unes avec les autres et de serrer avec force les assemblages obtenus ; ces particularités permettent de supprimer, dans une certaine mesure, les joints de fixation, des entretoises, des nervures destinées habituellement à raidir et renforcer les éléments d'assemblages.

Le JPP est un cordon fermé d'élastomère silicone de section ovoïde déposé selon un profil bien défini, devant assurer l'étanchéité de deux (ou plusieurs) pièces démontables.

La compression et la cohésion du matériau élastomérique en CSI assurent alors l'étanchéité. Le niveau suffisant de propriétés avant la première compression permet des démontages et remontages successifs des deux (ou plusieurs) pièces, tout en garantissant une parfaite étanchéité.

Les JPP en CSI apportent de nombreux avantages pour les applications d'étanchéité industrielles :

1. bon niveau de thixotropie des CSI, d'où la possibilité d'automatisation offrant :

   · une parfaite maîtrise dimensionnelle du joint
   · un positionnement exact (pas de risque de déchirure)
   · une bonne reproductibilité

2. produit silicone performant :

   très bonne vitesse de prise (1 min. à 150°C)
   long "pot-life", 8 heures à température ambiante
   très bonne adhérence sur tous les substrats (verre, métaux, matières plastiques)
   · haute tenue thermique (-60 à + 250°C)
   · bonne tenue au vieillissement
   · hautes performances mécaniques
   · bonne résistance aux agressions, chimiques (eau, huiles, liquides de refroidissement)
   · très faible déformation rémanente à la compression
   · faible gonflement dans les liquides moteurs
   · amortissement des vibrations

3. solution d'étanchéité pratique :

   · démontage aisé : bon accrochage de joint sur la pièce équipée, et bonne anti-adhérence sur l'autre pièce
   · réemploi après démontage

Ces qualités techniques se complètent par avantages économiques :

- coût faible des essais de faisabilité (pas de moules successifs)
- matière première et mise en oeuvre moins coûteuses qu'un joint moulé
- pas de stock de joints, accompagnés de références multiples
- pas de manipulation (manuelle ou robotisée) de joints souples
- un seul produit et un seul équipement peuvent réaliser successivement plusieurs profils différents de joint
- réticulation rapide : gain d'énergie et en cadence par un montage immédiat (aucun stock intermédiaire)
- contrôle qualité rapide (test visuel, mise en pression de la pièce)
- un seul élément fini, JPP solidaire de la pièce, par rapport à deux éléments pour une solution classique, joint moulé et pièce.

Dans le secteur du transport, les applications d'étanchéité par JPP avec les compositions CSI peuvent être étendues à toutes les pièces moteur exigeant une démontabilité telles à titre d'exemples :

- Couvre-culasse
- Pompe à huile
- Carter d'huile
- Carter de distribution
- Guide d'embrayage

Les matériaux constituant ces pièces et sur lesquels les CSI sont parfaitement adhérents peuvent être la fonte, l'aluminium, la tôle galvanisée, la tête électrozinguée, la tôle peinte avec peinture cataphorèse, le polyamide, les résines phénoplastes etc...

Dans le secteur de l'électroménager, différentes applications JPP des ESA peuvent être citées :

- Portes de fours électriques, ou à gaz
- Portes de fours micro-ondes, ou mixtes
- Tambour de machines à laver

Les applications de JPP en CSI envisageables dans l'industrie électrotechnique et électronique sont

- Couvercles de boîtiers électriques ou électroniques
- Cartes électroniques.

Pour ce qui est des joints injectés, ils sont formés en milieu confiné, dans des cavités souvent closes ou dans des moules préalablement enduits d'agents de démoulage. Les compositions placées dans ces cavités se transforment rapidement par chauffage en élastomère dont les propriétés sont identiques à celles d'élastomère découlant du durcissement des compositions à l'air ambiant. Pour le surmoulage des joints, il suffira de retirer le moule après réticulation de produit adhérent parfaitement sur le support du plan de joint.

Ainsi, selon un premier mode d'utilisation, l'invention vise l'application de la composition siliconée ou du système bi-composant tels que définis ci-dessus, sans exclusion des POS fluorés comme constituants possibles de ladite composition à la fabrication de joints "in situ", de préférence des joints écrasés, des joints profilés sur pièce ou des joints injectés ou extrudés.

S'agissant du procédé d'application visé ci-dessus et concernant plus spécialement la réalisation de joints écrasés, il est caractérisé en ce qu'il consiste

- A produire au moins un cordon thixotrope à partir de la composition non-coulante et réticulable en élastomère silicone adhérente tel que défini supra, et/ou à partir du système tel que défini supra,
- A déposer ce cordon sur la zone de contact d'au moins l'un des éléments à assembler,
- A assembler les éléments en les appliquant les uns contre les autres par leur zone de contact,
- A faire en sorte que la réticulation de l'élastomère intervienne, de préférence par chauffage.

En ce qui concerne le procédé d'application visant la réalisation de joints profilés sur pièce entre au moins deux éléments à assembler, ce procédé est caractérisé en ce qu'il consiste essentiellement :

- A produire au moins un cordon thixotrope à partir de la composition non-coulante et réticulable en élastomère silicone adhérente tel que défini supra, et/ou à partir du système tel que défini supra,
- A déposer ce cordon sur la zone de contact d'un des éléments à assembler,
- A faire en sorte qu'intervienne la réticulation de l'élastomère formant le cordon, de préférence en chauffant.
- Et à assembler les éléments en les appliquant les uns contre les autres au moins par la zone de contact comprenant le cordon.

S'agissant du procédé d'application tel que visé ci-dessus, pour la réalisation de joints injectés, il consiste essentiellement à mettre en oeuvre des dispositifs d'injection comprenant des moules dans lesquels l'élastomère réticule à chaud.

Dans le cas où il s'agit de joints extrudés, le procédé d'application consiste essentiellement à mettre en oeuvre des extrudeuses au sortir desquelles l'élastomère réticule à chaud.

Ces dispositifs d'injection et d'extrusion sont bien connus de l'homme de l'art.

Selon un autre de ses objets, la présente invention concerne les joints obtenus par les procédés d'application selon le premier mode d'utilisation tel que défini ci-dessus.

S'agissant de l'assemblage, et hormis l'assemblage de pièces par joint flué tel que décrit ci-dessus, on peut citer des applications de collage surfacique telles le collage de tissus par exemple sur sièges - sellerie - (secteur du transport). Les CSI sont particulièrement adaptées à cette application de par leur bon classement au niveau de la réglementation sécurité feu-fumée, de par son bon niveau de thixotropie qui évite une imprégnation du produit avant réticulation suivi d'un tachage du tissu et enfin de par son bon niveau d'adhérence sur les supports constituant les assises (acier, inox, polyester, ABS, polycarbonate, velours etc...).

Ainsi, suivant un deuxième mode d'utilisation de la composition silicone élastomère additionnée de téflon@ selon l'invention, sans exclusion des POS fluorés comme constituants possibles de ladite composition, on applique cette dernière à titre de colle pour l'assemblage d'au moins deux éléments. Un tel procédé d'application est caractérisé en ce qu'il consiste essentiellement à enduire au moins l'un des éléments à assembler d'une couche de composition selon l'invention, à assembler lesdits éléments en les appliquant les uns contre les autres, et à faire réticuler la colle élastomère, de préférence par chauffage.

Suivant une disposition avantageuse de l'invention, les éléments à assembler sont en nombre de deux.

Plus préférentiellement encore, l'un des éléments à assembler est un matériau fibreux tissé, tricoté, non tissé à base de fibres naturelles et/ou synthétiques classiques.

Il peut s'agir par exemple d'une application de collage de matériau fibreux e.g. textile, notamment dans le cadre de l'activité de sellerie.

Outre ces applications jointoiement et assemblage pour les CSI thixotropées téflon®, on peut mentionner également leurs utilisations en moulage, estampage, tampographie...

La présente invention sera mieux comprise à la lumière des exemples qui suivent et qui décrivent les effets de l'incorporation de téflon® dans des RTV standards, la préparation d'une composition élastomère RTV polyaddition, additionné de téflon®, ainsi que l'évaluation des propriétés rhéologiques de cette composition, de même qu'une application de celle-ci pour un collage dans le domaine de la sellerie.

## **EXEMPLES**

## **EXEMPLE 1 - EFFET DU TEFLON® SUR DES RTV STANDARDS**

Le téflon® permet de modifier le comportement rhéologique des compositions silicone, en particulier de les rendre non coulantes.

Le caractère non coulant peut être apprécié par exemple par une mesure de la fluidité Matthis. On note alors la progression de la composition sur une réglette verticale, le produit étant évidemment d'autant moins coulant qu'il se propage peu.

Le tableau ci-dessous montre l'effet comparatif des deux variétés de téflon@ ajoutées à des milieux silicones RTV standards non autoadhérents RHODORSIL RTV 2556 de RHODIA SILICONES et RHODORSIL RTV V1065 de RHODIA SILICONES pour former des CSI, par rapport à un polydiméthylsiloxane (PDMS) témoin à extrémités triméthylsilyle, à savoir le produit commercial RHODORSIL V100 000 de RHODIA SILICONES.

|  | TEFLON® | MATTHIS (mm/min) |
|---|---|---|
| Huile silicone de viscosité 100Pa.s PDMS témoin |  | 55 |
| Huile silicone de viscosité 100Pa.s PDMS témoin | 2,5% poudre 6CN | 10 |
| Huile silicone de viscosité 100Pa.s PDMS témoin | 2,5% dispersion 30N | 10 |
| RHODORSIL RTV 2556 |  | 60 |
| RHODORSIL RTV 2556 | 3% poudre 6CN | 0 |
| RHODORSIL RTV 2556 | 3% dispersion 30N | 0 |
| RHODORSIL RTV V1065 |  | 10 |
| RHODORSIL RTV V1065 | 1 % poudre 6CN | 0 |
| RHODORSIL RTV V1065 | 1 % dispersion 30N | 0,6 |

La poudre 6CN est un mélange de 50% de quartz broyé (Sifraco C600) et de 50% de téflon® 6CN caractérisé par une granulométrie voisine de 500 $\mu$m.

La dispersion 30 N est une dispersion aqueuse à 60% de téflon®.

Ces deux présentations de téflon® sont produites par DuPont.

**EXEMPLE 2 : PREPARATION D'UNE CSI AUTOADHERENTE**

**2.1. Préparation d'un prémélange**

On prépare tout d'abord une suspension dénommée prémélange en mélangeant à température ambiante dans un réacteur de capacité environ 2 L équipé d'une agitation centrale du type "ailes de papillon" les ingrédients suivants :

- Résine D : 210 g de résine de struction $MM^{vi}DD^{vi}Q$ contenant en poids environ 0,6% de groupes vinyles (Vi) et constituée de, en poids environ 17% de $(CH_3)_3SiO_{0,5}$ (motifs M), 0,5% de motifs $(CH_3)_2ViSiO_{0,5}$ (motifs $M^{vi}$), 75% de motifs $(CH_3)_2SiO$ (motifs D) et 8% de motifs $SiO_2$ (motifs Q)
- POS A : 400 g d'un PDMS bloqué par des motifs $(CH_3)_2ViSiO_{0,5}$ ayant une viscosité d'environ 100Pa.s et contenant environ 0,0022 fonctions SiVi pour 100 g d'huile.
- 200 g d'une charge de terre de diatomées de surface spécifique environ $5m^2/g$ et caractérisée par son pH voisin de 8 (CELITE® 350)
- 10 g d'oxyde de magnésium en poudre.

Le tout est homogénéisé pendant environ 50 min à une vitesse de rotation de l'agitateur de 200 T ; la température atteint alors environ 80°C.
L'appareil est alors mis sous vide d'environ 25 mm Hg et la vitesse d'agitation est augmentée à 500T pendant 5 min ; dans cette phase, la température atteint environ 125°C.
L'installation est ramenée à pression atmosphérique et on rajoute :

- la charge F + PTFE 10 g d'un mélange poudreux constitué de 50% en poids de Téflon (Du-Pont, Résine T CN®) et de 50% en poids de quartz broyé (SIFRACO C-600).

L'ensemble est homogénéisé pendant encore 5 à 10 min à environ 350 T.
On recueille alors le prémélange qui sert à la préparation des parties A et B du bicomposant.

Partie $P_1$ du bicomposant

Dans le même mélangeur que précédemment, on charge:

- 415 g du prémélange
- POS A : 81,3 g du PDMS bloqué par des motifs $(CH_3)_2ViSiO_{0,5}$ ayant une viscosité d'environ 100 Pa.s et contenant environ 0,0022 fonctions, SiVi pour 100 g d'huile promoteur E.3 - 3,5g d'orthotitanate de butyle
  Catalyseur C - 0,02 g de platine métal sous la forme d'un complexe métallique, connu sous le nom de catalyseur de Karstedt.
  Cette masse est homogénéisée pendant 20 à 30 min à environ 100 T. Le mélange résultant est ensuite dégazé par mise sous vide 20 à 30 mm Hg.

Partie $P_2$ du bicomposant

On charge d'autre part dans le mélangeur :

- 415 g du prémélange
- POS A : 47,95 g du PDMS bloqué par des motifs $(CH_3)_2ViSiO_{0,5}$ ayant une viscosité d'environ 100 Pa.s et contenant environ 0,0022 fonction SiVi pour 100 g d'huile,
- POS B: 18,9g d'un poly(diméthyl)(hydrogénométhyl)siloxane, bloqué par des motifs $(CH_3)_2HsiO\ 0,5$ ayant une viscosité d'environ 25 mPa.s et contenant au total environ 0,7 fonction SiH pour 100 g d'huile
- Promoteur E.1 : 9g de vinyltriméthoxysilane (VTMO)
- Promoteur E.2 : 9 g de vinyltriméthoxysilane (VTMO)
- Promoteur E.2 . 9 g de glycidoxypropyltriméthoxysilane (GLYMO)
- Inhibiteur I : 0,15g d'éthynylcyclohexanol.
  La masse est homogénéisée pendant 20 à 30 min à environ 100 T. Le mélange résultant est dégazé par mise sous vide de 20 à 30 mm Hg.

**2.2. Préparation de l'élastomère**

Les parties $P_1$ et partie $P_2$ ainsi obtenues sont soigneusement mélangées poids par poids.

**EXEMPLE 3 : PROPRIETES DE LA CSI DE L'EXEMPLE 2**

Pour les évaluations laboratoire, le produit est mis en oeuvre à partir d'un pistolet pneumatique permettant d'extruder le produit contenu dans des cartouches bi-composant (2x200cc) : le mélange est réalisé à l'aide d'un mélangeur statique (diamètre 8, 18 éléments mélangeurs) placé immédiatement à la sortie de la cartouche.

**3.1 Rhéologie**

3.1.a. Détermination du profil et mesure de la viscosité

Sur appareil CARRI-MED avec un cône de diamètre 2.0cm et un angle de 1°, 1' la viscosité chute très fortement avec le gradient de cisaillement pour atteindre 150 à 200 000 mPa.s avec un gradient de 25 $S^{-1}$.

3.1.b. Détermination du profil et mesure de la viscosité

Selon la méthode d'essai RENAULT D55 1996 : un cordon de 2 mm de diamètre est déposé sur une tôle, laquelle est ensuite mise en position verticale. L'évaluation consiste à quantifier la coulure du cordon (en mm) si elle existe. Dans le cas de l'ESA 7142 PEX, la coulure est de 0 mm.

**3.2 Propriétés mécaniques sur éprouvettes H2**

3.2.a. A l'état initial

Pour ce faire, un film de 2 mm est réalisé : le produit est réticulé pendant 1 heure à 150°C sous presse chauffante. Les éprouvettes sont ensuite prélevées : une mesure de dureté shore A est effectuée puis les propriétés mécaniques (résistance rupture, module, allongement sont évaluées à l'aide d'un dynanomètre de type ZWICK avec une vitesse de traction de 500 mm/min.

| | |
|---|---|
| Dureté shore A : | 44 |
| Résistance rupture : | 2,8 Mpa |
| Allongement : | 200% |
| Module à 100% : | 1,4 Mpa |

3.2.b. Au contact des fluides moteurs

A partir d'éprouvettes H2 préparées et évaluées comme précédemment mais ayant subi après réticulation une immersion pendant 72 h 00 dans le fluide considéré.

| | |
|---|---|
| Fluide : | huile 15W40 spécification API SJ Température 150°C |
| Dureté Shore A : | 27 |
| Résistance rupture : | 1,8 Mpa |
| Allongement : | 189% |
| Module à 100% : | 1,0 Mpa |

3.2.c. Avec contraintes thermiques

A partir d'éprouvettes H2 préparées et évaluées comme précédemment mais ayant subi un vieillissement thermique de 72h00.

| | |
|---|---|
| Température : | 250°C |
| Dureté shore A : | 50 |
| Résistance rupture : | 2,0 Mpa, |

(suite)

Allongement : 70%

**3) Propriétés d'adhésion**

Stérigmes utilisés : éprouvettes aluminium AG3
Eprouvettes polyamide 66 chargés 30% fibres de verres.
Les éprouvettes ont une dimension de 100 mm x 25,0 mm x 4 mm.
La surface de collage est de 312,5 mm$^2$ (12,5 x 25) et l'épaisseur du collage est de 1 mm.
Le montage est placé pendant 2 heures à 130°C dans une étuve.
L'adhésion est mesurée au travers d'un test de traction cisaillement réalisé sur un dynamomètre de type ZWICK : on détermine la contrainte à la rupture de l'assemblage et le faciès de rupture (rupture adhésive ou rupture cohésive si rupture dans la masse du matériau). La vitesse de traction est de 10 mm/min.
Support aluminium : résistance rupture = 2,0 Mpa - 90 à 100% de rupture cohésive.
Support polyamide : résistance rupture = 1,8 - 90 à 100% de rupture cohésive.

**3.4) Déformation rémanente à la compression - retour élastique du joint**

Des pions sont moulés avec l'élastomère considéré (ESA 1) : le produit est coulé dans une cavité de manière à obtenir des poins dont le diamètre est de 29 mm et la hauteur 25 mm. Le tout est placé sous une presse chauffante à 150°C pendant une durée de 1 heure.
Après démoulage des poins, refroidissement, et mesure de la hauteur des pions ($h_i$), ces mêmes pions sont comprimés à 25% au moyen de petites presses avec des cales calibrées de hauteur $H_c$ pendant 72h00 à 150°C. Le démontage est réalisé à chaud et 30 min. après la hauteur des pions est de nouveau mesurée ($h_f$).
La DRC est alors calculée grâce à la formule :

$$DRC \quad (h_i - h_f)(h_i - h_c)$$

Avec la CSI de l'exemple 2, on obtient une valeur comprise entre 35 et 40%.

**EXEMPLE 4 : APPLICATION ASSEMBLAGE PAR COLLAGE A L'AIDE DE LA CSI DE L'EXEMPLE 2**

La composition CSI de l'exemple 2 est extrudée par une unité bi-composante équipée d'un mélangeur statique puis enduite sur l'envers du tissu velours à un grammage de 150 g/m$^2$ (racle de 2 mm). La face enduite est ensuite assemblée sur un treillis métallique renforcé par un tissu coton. Le tissu est alors marouflé pour permettre un bon mouillage de la fibre par la pâte silicone avant de faire réticuler l'ensemble pendant 1 heure à 130°C. Des éprouvettes de 5 cm de large sont ensuite découpées pour réaliser un essai de pelage à 180°C sur une unité de traction ZWICK à une vitesse de 50 mm/min ($\pm 2$). Les forces d'adhésion mesurées par pelage sont de 10 N/cm avec une rupture cohésive dans la masse de l'élastomère.

**Revendications**

1. Utilisation d'au moins une résine fluorée à base de polyfluorooléfine (PFO), de polyfluoroéthylène (PFE), de polyfluorure de vinyle, de polyfluorure de vinylidène, de polytétrafluoroéthylène (PTFE), de polymonochlorotrifluoroéthylène, de polyfluoropolyéthers, de copolymère d'éthylène et de tétrafluoroéthylène, de copolymère de tétrafluoroéthylène et de perfluorovinyléther, ou de copolymère d'éthylène perfluoro et de propylène perfluoro, de préférence à base de polytétrafluoroéthylène (PTFE),
à titre d'agent thixotropant, dans une composition élastomère silicone, réticulable par polyaddition, du type de celles comprenant des polyorganosiloxanes (POS) porteurs de motifs ≡Si-alcényle en $C_2$-$C_6$ et de motifs ≡Si-H, pour conférer à cette composition un comportement visco-élastique non coulant.

2. Utilisation selon la revendication 1, **caractérisée en ce que** l'agent thixotropant qui est à base de polyfluorooléfine (PFO), de préférence PFE et plus préférentiellement encore PTFE, se présente sous forme pulvérulente sèche ou en dispersion -de préférence aqueuse- et est incorporé à raison de 0,1 à 10%, de préférence 1 à 5% en poids sur sec par rapport à la matière sèche totale de la composition.

**3.** Utilisation selon la revendication 1 ou 2, **caractérisée en ce que** les POS de la composition élastomère silicone non coulante, réticulable par polyaddition et additivée en résine fluorée, sont constitués de motifs siloxyles

$$R_nSiO \frac{4-n}{2}$$

èt/ou les motifs siloxyles de formule :

$$Z_xR_ySiO \frac{4-x-y}{2}$$

formules dans lesquelles les divers symboles ont la signification suivante :

- les symboles R, identiques ou différents, représentent chacun un groupement de nature hydrocarbonée non hydrolysable, ce radical pouvant être :

* un radical alkyle ayant de 1 à 5 atomes de carbone et pouvant comporter de 1 à 6 atomes de chlore,
* des radicaux cycloalkyles ayant de 3 à 8 atomes de carbone et pouvant contenir de 1 à 4 atomes de chlore,
* des radicaux aryles, alkyaryles et ayant de 6 à 8 atomes de carbone et pouvant contenir de 1 à 4 atomes de chlore,
* des radicaux cyanoalkyle ayant de 3 à 4 atomes de carbone ; les groupes méthyle ; éthyle ; propyle ; isopropyle ; butyle ; isobutyle; n-pentyle ; t-butyle ; chlorométhyle ; dicholorométhyle ; $\alpha$-chloroéthyle ; $\alpha$, $\beta$-dicloroéthyle ; $\beta$-cyanoéthyle ; y-cyanopropyle, phényle : p-chlorophényle ; m-chlorophényle ; dichoro-3,5 phényle ; trichloro phényle ; tétrachlorophényle; o-, p- ou m-totyle ; xylyles comme diméthyl-2, 3-phényle, diméthyl-3, 4-phényle, étant préférés ; les radicaux méthyle et phényle étant particulièrement préférés ;

- les symboles Z, représentant chacun un atome d'hydrogène ou un groupe alkényle en $C_2$-$C_6$ (de préférence vinyle) ;
- n = un nombre entier égal à 0, 1, 2 ou 3 ;
- x = un nombre entier égal à 0, 1, 2 ou 3 ;
- y = un nombre entier égal à 0, 1 ou 2 ;
- la somme x + y se situe dans l'intervalle allant de 1 à 3.

**4.** Utilisation selon l'une quelconque des revendications 1 à 3, **caractérisée en ce que** la composition élastomère silicone non coulante, réticulable par polyaddition et additivée en résine fluorée, comprend :

- A - au moins un polyorganosiloxane présentant, par molécule, au moins deux groupes alcényles, en $C_2$-$C_6$ liés au silicium,
- B - au moins un polyorganosiloxane présentant, par molécule, au moins deux atomes d'hydrogène liés au silicium,
- C - une quantité catalytiquement efficace d'au moins un catalyseur, composé d'au moins un métal appartenant au groupe du platine,
- D - éventuellement au moins une résine POS, de préférence porteuse de radicaux Z = alcényle en $C_2$-$C_6$ ou H liés au silicium,
- E - éventuellement un promoteur d'adhérence de préférence ternaire, et plus préférentiellement encore consistant en :

⅄ E.1 ⅄ au moins un organosilane alcoxylé contenant par molécule, au moins un groupe alcényle en $C_2$-$C_6$,

⅄ E.2 ⅄ au moins un composé organosilicé comprenant au moins un radical époxy,

⅄ E.3 ⅄ au moins un chélate de métal M et/ou un alcoxyde métallique de formule générale : M(OJ)n, avec n= valence de M et J=alkyle linéaire ou ramifié en $C_1$-$C_8$, M étant choisi dans le groupe formé par Ti, Zr, Ge, Li, Mn, Fe, Al, Mg,

- F - éventuellement une charge minérale, renforçante ou non,
- G - un polyorganosiloxane qualifié d'allongeur et présentant des motifs siloxyle terminaux à fonctions hydrogéno,
- H - éventuellement un neutralisant,
- I - éventuellement un inhibiteur de réticulation et/ou autre(s) additif(s) en usage dans ce type de compositions,
- J - et éventuellement des charges microsphériques creuses inorganiques expansées ou expansables.

5. Utilisation selon l'une quelconque des revendications 1 à 4, **caractérisée en ce que** le (ou les) constituants POS A et/ou D de la composition élastomère silicone non coulante, réticulable par polyaddition et additivée en résine fluorée, est (sont) choisi(s) parmi les POS alcénylsilylés ayant une viscosité à 25°C $\eta$ telle que :

$$2\ 500 < \eta \leq 100\ 000\ \text{mPa.s.}$$

6. Utilisation selon l'une quelconque des revendications 1 à 4, **caractérisée en ce que** le (ou les) constituants POS A et/ou D de la composition élastomère silicone non coulante, réticulable par polyaddition, est (sont) choisi(s) parmi les POS alcénylsilylés ayant une viscosité à 25°C $\eta$' telle que :

$$10\ 000 < \eta' \leq 200\ 000\ \text{mPa.s.}$$

7. Utilisation selon l'une quelconque des revendications 1 à 6, **caractérisée en ce que** la composition élastomère silicone non coulante, réticulable par polyaddition et additivée en résine fluorée, possède une fluidité Matthis (FM) telle que :

$$FM < 1,0$$

de préférence

$$FM < 0,5$$

et plus préférentiellement encore

$$FM \approx 0.$$

8. Utilisation selon l'une quelconque des revendications 1 à 7, dans laquelle la composition élastomère silicone non coulante, réticulable par polyaddition et additivée en résine fluorée, est obtenue à partir d'un sytème bicomposant précurseur lequel est **caractérisé en ce que** :

- il se présente en deux parties P1 et P2 distinctes destinées à être mélangées pour former la composition,
- l'une des deux parties P1 ou P2 comprend le catalyseur (C) et un ou plusieurs POS (A et/ou D) ou (B) porteurs d'une seule espèce de groupements de réticulation, respectivement ≡Si-alcényle et ≡Si-H ;
- et dans le cas où le promoteur E comprenant E.1, E.2, E.3 est présent, la partie P1 ou P2 contenant le POS (B) porteur seulement de ≡Si-H est exempte de composé E.3 du promoteur (E) et la partie P1 ou P2_incluant le composé E.1 du promoteur (E) ne comprenant pas le catalyseur(C).

9. Utilisation selon l'une quelconque des revendications 1 à 8 **caractérisée en ce que** la composition élastomère silicone non coulante, réticulable par polyaddition et additivée en résine fluorée, sans exclusion des POS fluorés comme constituants possibles de la composition, est appliquée à la fabrication de joints « in situ », de préférence de joints écrasés, de joints profilés sur pièce ou de joints injectés ou extrudés.

**10.** Utilisation selon la revendication 9, à la réalisation de joints écrasés laquelle est **caractérisée en ce qu'**elle consiste essentiellement :

- à produire au moins un cordon thixotrope à partir de la composition élastomère silicone non coulante, réticulable par polyaddition et additivée en résine fluorée, telle que définie dans l'une quelconque des revendications 1 à 7, et/ou à partir du système selon la revendication 8,
- à déposer ce cordon sur la zone de contact d'au moins l'un des éléments à assembler,
- à assembler les éléments en les appliquant les uns contre les autres par leur zone de contact,
- à faire en sorte que la réticulation de l'élastomère intervienne, de préférence par chauffage.

**11.** Utilisation selon la revendication 9 à la réalisation de joints profilés sur pièce entre au moins deux éléments à assembler, laquelle est **caractérisée en ce qu'**elle consiste essentiellement :

- à produire au moins un cordon thixotrope à partir de la composition élastomère silicone non coulante, réticulable par polyaddition et additivée en résine fluorée, telle que définie dans l'une quelconque des revendications 1 à 7, et/ou à partir du système selon la revendication 8,
- à déposer ce cordon sur la zone de contact d'un des éléments à assembler,
- à faire en sorte qu'intervienne la réticulation de l'élastomère formant le cordon, de préférence en chauffant,
- et à assembler les éléments en les appliquant les uns contre les autres au moins par la zone de contact comprenant le cordon.

**12.** Utilisation selon la revendication 9 à la réalisation :

- de joints injectés à l'aide de dispositifs d'injection comprenant des moules dans lesquels l'élastomère réticule à chaud,
- ou des joints extrudés à l'aide d'extrudeuses au sortir desquelles l'élastomère réticule à chaud.

**13.** Joint obtenu par une utilisation selon l'une quelconque des revendications 9 à 12, de la composition élastomère silicone non coulante, réticulable par polyaddition et additivée en résine fluorée, telle que définie dans l'une quelconque des revendications 1 à 7, et/ou du système selon la revendication 8.

**14.** Procédé pour l'assemblage d'au moins deux éléments,
**caractérisé en ce qu'**il consiste essentiellement :

❖ à enduire au moins l'un des éléments à assembler, d'une couche d'une composition élastomère silicone non coulante, réticulable par polyaddition et additivée en résine fluorée, du type de celles comprenant des polyorganosiloxanes (POS) porteurs de motifs ≡Si-alcényle en C2-C6 et de motifs ≡Si-H, ladite composition étant appliquée à titre de colle,
❖ à assembler les éléments en les appliquant les uns contre les autres,
❖ et à faire réticuler la colle élastomère, de préférence par chauffage

et **caractérisé en ce que** ladite résine fluorée est une résine fluorée à base de polyfluorooléfine (PFO), de polyfluoroéthylène (PFE), de polyfluorure de vinyle, de polyfluorure de vinylidène, de polytétrafluoroéthylène (PTFE), de polymonochlorotrifluoroéthylène, de polyfluoropolyéthers, de copolymère d'éthylène et de tétrafluoroéthylène, de copolymère de tétrafluoroéthylène et de perfluorovinyléther, ou de copolymère d'éthylène perfluoro et de propylène perfluoro, de préférence à base de polytétrafluoroéthylène (PTFE), et est utilisée à titre d'agent thixotropant, dans ladite composition élastomère silicone, pour conférer à cette composition un comportement visco-élastique non coulant.

**15.** Procédé selon la revendication 14, **caractérisée en ce que** l'un des éléments à assembler est un matériau fibreux, tissé, tricoté, non tissé à base de fibres naturelles ou synthétiques.

**Claims**

**1.** Use of at least one fluorinated resin based on a polyfluoro-olefin (PFO), polyfluoroethylene (PFE), polyvinyl fluoride, polyvinylidene fluoride, polytetrafluoroethylene (PTFE), polymonochlorotrifluoroethylene, polyfluoropolyethers, ethylene/tetrafluoroethylene copolymer, tetrafluoroethylene/perfluorovinyl-ether copolymer, or perfluoroethylene/perfluoropropylene copolymer, preferably based on polytetrafluoroethylene (PTFE),
as a thixotropic agent, in a silicone elastomer composition that can be crosslinked by polyaddition, of the type containing polyorganosiloxanes (POSs) carrying $\equiv$Si-$C_2$-$C_6$ alkenyl units and $\equiv$Si-H units, to impart to this composition a non-flowing, viscoelastic behavior.

2. Use according to Claim 1, **characterised in that** the thixotropic agent, which is based on a polyfluoro-olefin (PFO), preferably on PFE, and more preferably on PTFE, is present in dry powdered form or in a dispersion, preferably aqueous, and is incorporated in an amount from 0.1 to 10%, preferably 1 to 5 wt%, dry, with respect to the total dry matter of the composition.

3. Use according to Claim 1 or 2, **characterised in that** the POSs of the non-flowing silicone elastomer composition that can be crosslinked by polyaddition and containing resin additive, consist of siloxyl units

$$R_n SiO_{\frac{4-n}{2}}$$

and/or siloxyl units of formula:

$$Z_x R_y SiO_{\frac{4-x-y}{2}}$$

in which formulas the various symbols have the following meanings:

- the symbols R, identical or different, each represent a non-hydrolysable hydrocarbon group, which can be:

  * an alkyl radical with 1 to 5 carbon atoms, which can contain 1 to 6 chlorine atoms,
  * cycloalkyl radicals with 3 to 8 carbon atoms, which can contain 1 to 4 chlorine atoms,
  * aryl, alkyl-aryl radicals, having 6 to 8 carbon atoms, which can contain 1 to 4 chlorine atoms,
  * cyanoalkyl radicals with 3 to 4 carbon atoms; the groups methyl; ethyl; propyl; isopropyl; butyl; isobutyl; n-pentyl; tert-butyl; chloromethyl; dichloromethyl; $\alpha$-chloroethyl; $\alpha,\beta$-dichloroethyl; $\beta$-cyanoethyl; $\gamma$-cyano-propyl, phenyl; p-chlorophenyl; m-chlorophenyl; 3,5-dichlorophenyl; trichlorophenyl; tetrachlorophenyl; o-, p-, or m-tolyl; xylyls, such as 2,3-dimethylphenyl, 3,4-dimethylphenyl, being preferred; the methyl and phenyl radicals being particularly preferred;

  - the symbols Z, each representing a hydrogen atom or a $C_2$-$C_6$ alkenyl group (preferably vinyl);
  - n = a whole number equal to 0, 1, 2, or 3;
  - x = a whole number equal to 0, 1, 2, or 3;
  - y = a whole number equal to 0, 1, or 2;
  - the sum x + y is in the range from 1 to 3.

4. Use according to any of Claims 1 through 3, **characterised in that** the non-flowing silicone elastomer composition that can be crosslinked by polyaddition and containing fluorinated resin additive, contains:

  - A - at least one polyorganosiloxane having at least two $C_2$-$C_6$ alkenyl groups bonded to the silicon, per molecule,
  - B - at least one polyorganosiloxane having at least two hydrogen atoms bonded to the silicon, per molecule,
  - C - a catalytically effective amount of at least one catalyst, composed of at least one metal belonging to the platinum group,
  - D - optionally at least one POS resin, preferably carrying radicals Z = $C_2$-$C_6$ alkenyl or H bonded to silicon,
  - E - optionally an adhesion promoter, preferably ternary, and even more preferably consisting of:

    * E.1 - at least one alkoxylated organosilane, containing at least one $C_2$-$C_6$ alkenyl group per molecule,
    * E.2 - at least one organosilicate compound, containing at least one epoxy radical,
    * E.3 - at least one metal chelate M and/or metal alkoxide of general formula: M(OJ)n, with n = the valence of M and J = a linear or branched $C_2$-$C_6$ alkyl, M being chosen from the group formed by Ti, Zr, Ge, Li, Mn, Fe, Al, Mg,

- F - optionally a mineral filler, reinforcing or not,
- G - a polyorganosiloxane, capable of elongation, and having terminal siloxyl groups with hydrogen functions,
- H - optionally a neutraliser,
- I - optionally a crosslinking inhibitor and/or other additives used in this type of composition,
- J - optionally expanded or expandable inorganic hollow microsphere fillers.

5. Use according to any of Claims 1 through 4, **characterised in that** the constituent or constituents POS A and/or D of the non-flowing silicone elastomer composition that can be crosslinked by polyaddition and containing a fluorinated resin additive, is (are) chosen from among alkyenyl-silyl POSs having a viscosity, η, at 25°C such that: $2500 < \eta \leqq 100,000$ mPa.s.

6. Use according to any of Claims 1 through 4, **characterised in that** the constituent(s) POS A and/or D of the non-flowing silicon elastomer composition that can be crosslinked by polyaddition, is (are) chosen from among alkenyl-silyl POSs having a viscosity, η', at 25 °C such that:

$$10,000 < \eta' \leq 200,000 \text{ mPa.s.}$$

7. Use according to any of Claims 1 through 6, **characterised in that** the non-flowing silicone elastomer composition that can be crosslinked by polyaddition with a fluorinated resin additive, has a Matthis fluidity (MF), such that:

$$MF < 1.0$$

preferably

$$MF < 0.5$$

and more preferably

$$MF = 0$$

8. Use according to any of Claims 1 through 7, in which the non-flowing silicone elastomer composition that can be crosslinked by polyaddition and containing a fluorinated resin additive, is obtained from a two-component precursor system, **characterised in that**:

- it is present in two distinct parts, P1 and P2, intended to be mixed to form the composition,
- one of the two parts P1 or P2 contains the catalyst (C) and one or more POSs (A and/or D) or (B) carrying a single species of crosslinking groups, respectively, ≡ Si-alkenyl and ≡ Si-H;
- and, in the case where the promoter E, containing E.1, E.2, and E.3 is present, part P1 or P2, containing the POS (B) carrying only ≡ Si-H, is free of compound E.3 of the promoter (E), and part P1 or P2, including the compound E.1 of promoter (E), does not contain the catalyst (C).

9. Use according to any of Claims 1 through 8, **characterised in that** the non-flowing silicone elastomer composition that can be crosslinked by polyaddition and containing a fluorinated resin additive, without the exclusion of fluorinated POSs as possible constituents of the composition, is applied to the production of *in situ* joints, preferably flattened joints, profile joints on a part, or injected or extruded joints.

10. Use according to Claim 9 to make flattened joints, **characterised in that** it essentially consists:

- of producing at least one thixotropic strand from the non-flowing silicone elastomer composition that can be crosslinked by polyaddition and containing a fluorinated resin additive, as defined in any of Claims 1 through 7 and/or from the system according to Claim 8,
- depositing this strand on the contact zone of at least one of the elements being assembled,
- assembling the elements by applying them one against the other along their contact zone,
- proceeding in such a way that crosslinking of the elastomer occurs, preferably by heating.

11. Use according to Claim 9 to make profile joints on a part between at least two elements to be assembled, **characterised in that** it essentially consists of:

- producing at least one thixotropic strand from the non-flowing silicone elastomer composition that can be crosslinked by polyaddition with a fluorinated resin additive, as defined in any of Claims 1 through 7 and/or from the system according to Claim 9,
- depositing this strand on the contact zone of one of the elements being assembled,
- proceeding in such a way that crosslinking of the elastomer forming the strand occurs, preferably by heating
- and assembling the elements by applying them one against the other, at least along the contact zone containing the strand.

12. Use according to Claim 9 to make

- injected joints using injection devices containing molds, in which the elastomer is crosslinked while hot,
- or extruded joints using extruders, at the output of which the elastomer is crosslinked while hot.

13. A joint obtained by the use according to any of Claims 9 through 12 of the non-flowing silicone elastomer composition that can be crosslinked by polyaddition and containing a fluorinated resin additive, as defined in any of Claims 1 through 7 and/or the system according to Claim 8.

14. A process for assembling at least two elements, **characterised in that** it consists essentially of:

- ◆ coating at least one of the elements being assembled with a layer of a non-flowing silicone elastomer composition that can be crosslinked by polyaddition and containing a fluorinated resin additive, said composition being of the type containing polyorganosiloxanes (POSs) carrying $\equiv$ Si-$C_2$-$C_6$ alkenyl units and $\equiv$ Si-H units, said composition being applied as a glue,
- ◆ assembling the elements by applying them one against the other,
- ◆ crosslinking the elastomer glue, preferably by heating; and **characterised in that** said fluorinated resin is a fluorinated resin based on a polyfluoro-olefin (PFO), polyfluoroethylene (PFE), polyvinyl fluoride, polyvinylidene fluoride, polytetrafluoroethylene (PTFE), polymonochlorotrifluoroethylene, polyfluoropolyethers, ethylene/tetrafluoroethylene copolymer, tetrafluoroethylene/perfluorovinyl-ether copolymer, or perfluoroethylene/perfluoropropylene copolymer, preferably based on polytetrafluoroethylene (PTFE),

and is used as a thixotropic agent in said silicone elastomer composition to impart to this composition a non-flowing viscoelastic behavior.

15. A process according to Claim 14, **characterised in that** one of the elements being assembled is a fibrous, woven, knitted, non-woven material based on natural or synthetic fibers.

**Patentansprüche**

1. Verwendung zumindest eines fluorierten Harzes auf Basis von Polyfluorolefin (PFO), Polyfluorethylen (PFE), Vinylpolyfluorid, Vinylidenpolyfluorid, Polytetrafluorethylen (PTFE), Polymonochlortrifluorethylen, Polyfluorpolyether, Copolymer aus Ethylen und Tetrafluorethylen, Copolymer aus Tetrafluorethylen und Perfluorvinylether oder Copolymer aus Perfluorethylen und Perfluorpropylen, vorzugsweise auf Basis von Polytetrafluorethylen (PTFE), als thixotropes Mittel in einer elastomeren Silikon-Zusammensetzung, die durch Polyaddition vemetzbar ist, von denjenigem Typ, der $C_2$ - $C_6$ $\equiv$Si-Alkenyl-Motive und $\equiv$Si-H-Motive tragende Polyorganosiloxane (POS) umfasst, um der Zusammensetzung ein nicht flüssiges viskoelastisches Verhalten zu verleihen.

2. Verwendung gemäß Anspruch 1, **dadurch gekennzeichnet, dass** das thixotrope Mittel, das auf Polyfluorolefin (PFO), vorzugsweise PFE und noch bevorzugter PTFE basiert, in trockener Pulverform oder in - vorzugsweise wässriger - Dispersion vorliegt und in einem Verhältnis von 0,1 bis 10 Trocken-Gew.%, vorzugsweise 1 bis 5 Trocken-Gew.%, im Verhältnis zur Gesamt-Trockenmaterie der Zusammensetzung beinhaltet ist.

3. Verwendung gemäß Anspruch 1 oder 2, **dadurch gekennzeichnet, dass** die POS der elastomeren, nicht flüssigen Silikon-Zusammensetzung, die durch Polyaddition vemetzbar ist und der fluorisiertes Harz zugesetzt ist, aus Siloxyl-Motiven

$$R_n SiO_{\frac{4-n}{2}}$$

und/oder Siloxyl-Motiven der Formel

$$Z_x R_y SiO_{\frac{4-x-y}{2}}$$

bestehen, wobei die verschiedenen Symbole in diesen Formeln die folgende Bedeutung haben:

- die Symbole R, identisch oder unterschiedlich, alle eine Gruppe nichthydrolisierbarer Kohlenwasserstoffest repräsentieren, wobei der Rest sein kann:

   * ein Alkyl-Rest mit 1 bis 5 Kohlenstoffatomen, das 1 bis 6 Chloratome tragen kann,
   * Zykloaklyl-Reste mit 3 bis 8 Kohlenstoffatomen, die 1 bis 4 Chloratome enthalten können,
   * Aryl, Alkylaryl-Reste, die 6 bis 8 Kohlenstoffatome aufweisen und die 1 bis 4 Chloratome enthalten können,
   * Cyanoalkyl-Reste mit 3 bis 4 Kohlenstoffatomen; wobei Methylreste; Ehtyl; Propyl; Isopropyl; Butyl; Isobutyl; n-Pentyl; t-Butyl; Chlormethyl; Dichlormethyl; $\alpha$-Chlorethyl; $\alpha,\beta$-Dichlorethyl; $\beta$-Cyanoethyl; y-Cyanopropyl, Phenyl: p-Chlorphenyl; m-Chlorphenyl; Dichlor-3,5-Phenyl; Trichlorphenyl; Tetrachlorphenyl; o-, p- oder m-Tolyl; Xylyle wie Dimethyl-2, 3-Phenyl, Dimethyl-3, 4-Phenyl, wobei bevorzugt sind und die Methyl- und Phenyl-Reste besonders bevorzugt sind;

- die Symbole Z alle ein Wasserstoffatom oder ein $C_2$ - $C_6$-Alkenylrest (vorzugsweise Vinyl) repräsentieren;
- n = eine Ganzzahl gleich 0, 1, 2 oder 3;
- x = eine Ganzzahl gleich 0, 1, 2 oder 3;
- y = eine Ganzzahl gleich 0, 1 oder 2;
- wobei sich die Summe x + y im Intervall von 1 bis 3 bewegt.

4. Verwendung gemäß einem der Ansprüche 1 bis 3, **dadurch gekennzeichnet, dass** die nichtflüssige, elastomere Silikon-Zusammensetzung, vernetzbar durch Polyaddition, und der Fluorharz zugesetzt ist, umfasst:

- A - zumindest ein Polyorganosiloxan, das pro Molekül zumindest zwei an Silizium gebundene $C_2$ - $C_6$-Alkenyl-Reste zeigt,
- B - zumindest ein Polyorganosiloxan, das pro Molekül zumindest zwei an Silizium gebundene Wasserstoffatome zeigt,
- C - eine durch zumindest einen Katalysator bewirkte katalytische Quantität, zusammengesetzt aus zumindest einem zur Platingruppe gehörenden Metall,
- D - optional zumindest ein POS-Harz, vorzugsweise radikale Z = $C_2$ - $C_6$-Alkenyl oder an Silizium gebundenes H tragend,
- E - optional einen Haftförderer, vorzugsweise ternär, und noch bevorzugter bestehend aus:

   ⋀ E.1 ⋀ zumindest ein Alkoxylorganosilan, das pro Molekül zumindest ein $C_2$ - $C_6$-Alkenylrest enthält,

   ⋀ E.2 ⋀ zumindest eine Organosilizium-Zusammensetzung, die zumindest ein Epoxyrest umfasst,

⋏ E.3 ⋏ zumindest ein Chelat aus Metall M und/oder einem Metalloalkoxyd der allgemeinen Formel: M(OJ)n, mit n= Valenz von M und J= lineares oder verzweigtes $C_1$ - $C_8$-Alkyl, wobei M ausgewählt ist aus der Gruppe, die aus Ti, Zr, Ge, Li, Mn, Fe, Al, Mg besteht,

- F - optional eine Minerallast, verstärkend oder nicht,
- G - ein zur Verlängerung geeignetes Polyorganosiloxan, das in Wasserstofffunktionen endende Siloxyl-Motive zeigt,
- H - optional ein Neutralisator,
- I - optional ein Vernetzungs-Inhibitor und/oder andere(s) Additiv(e), die in dieser Art von Zusammensetzungen in Verwendung sind,
- J - und optional mikrosphärische, hohle anorganische Ladungen, expandiert oder expandierbar.

5. Verwendung gemäß einem der Ansprüche 1 bis 4, **dadurch gekennzeichnet, dass** die Komponente(n) POS A und/oder D der nichtflüssigen elastomeren Silikon-Zusammensetzung, vernetzbar durch Polyaddition, und der ein fluorisiertes Harz zugesetzt ist, ausgewählt ist (sind) aus den POS Silylalkenylen, die eine Viskosität bei 25°C von

$$2500 < \eta \leq 100000 \text{ mPa.s.}$$

haben.

6. Verwendung gemäß einem der Ansprüche 1 bis 4, **dadurch gekennzeichnet, dass** die Komponente(n) POS A und/oder D der nichtflüssigen elastomeren Silikon-Zusammensetzung, vernetzbar durch Polyaddition, ausgewählt ist (sind) unter den Silylalkenyl-POS, die eine Viskosität bei 25°C $\eta'$ wie etwa:

$$10 \text{ "0"} < \eta' \leq 200000 \text{ mPa.s.}$$

haben.

7. Verwendung gemäß einem der Ansprüche 1 bis 6, **dadurch gekennzeichnet, dass** die nichtflüssige elastomere Silikon-Zusammensetzung, vernetzbar durch Polyaddition, und der fluorisiertes Harz zugesetzt ist, eine Matthis-Fluidität (FM) von etwa:

$$FM < 1,0$$

vorzugsweise

$$FM < 0,5$$

und noch bevorzugtererweise

$$FM \approx 0.$$

besitzt.

8. Verwendung gemäß einem der Patentansprüche 1 bis 7, in dem die nichtflüssige elastomere Silikon-Zusammensetzung, die durch Polyaddition vernetzbar ist und der fluorisiertes Harz zugesetzt ist, aus einem Vorläufer-Zweikomponentensystem erhalten wird, welches **gekennzeichnet ist durch**:

- es liegt in zwei getrennten Teilen P 1 und P2 vor, die dazu bestimmt sind, zur Ausbildung der Zusammensetzung gemischt zu werden,
- einer der zwei Teile P 1 oder P2 umfasst den Katalysator (C) und ein oder mehrere POS (A und/oder D) oder (B), die nur eine einzige Art von Vernetzungsgruppe tragen, ≡Si-Alkenyl bzw. ≡Si-H;
- und in einem Fall, wo der Promoter E, der E.1, E.2, E.3 umfasst, vorhanden ist, ist der Teil P1 oder P2, der das lediglich ≡Si-H tragende POS B enthält, frei von dem Bestandteil E.3 des Förderers E und umfasst der Teil P1 oder P2, der den Bestandteil E. des Förderers E beinhaltet, den Katalysator (C) nicht.

9. Verwendung gemäß einem der Ansprüche 1 bis 8, **dadurch gekennzeichnet, dass** die nichtflüssige elastomere Silikon-Zusammensetzung, die durch Polyaddition vernetzbar ist und der fluorisierte Harze zugesetzt ist, ohne Ausschluss von fluoriertem POS als mögliche Bestandteile der Zusammensetzung für die Herstellung von Dichtungen "in situ" eingesetzt wird, vorzugsweise für Quetschdichtungen, auf dem Stück profilierte Dichtungen oder injizierte oder extrudierte Dichtungen.

10. Verwendung gemäß Anspruch 9, zur Realisierung von Quetschdichtungen, die **dadurch** charakterisiert ist, dass sie im Wesentlichen besteht aus:

   - Herstellen zumindest eines thixotropen Strangs aus der nichtflüssigen elastomeren Silikon-Zusammensetzung, die durch Polyaddition vernetzbar ist, und der Fluorharz zugesetzt ist, die gemäß einem der Ansprüche 1 bis 7 definiert ist, und/oder aus dem System gemäß Anspruch 8,
   - Aufbringen des Strangs auf die Kontaktzone zumindest eines der zusammenzusetzenden Elemente,
   - Zusammensetzen der Elemente, indem sie eines gegen das andere an ihrer Kontaktzone aneinander gebracht werden,
   - sich darum kümmern, dass die Vernetzung des Elastomers stattfindet, vorzugsweise durch Erhitzen.

11. Verwendung gemäß Anspruch 9 zur Realisierung von am Stück profilierten Dichtungen zwischen zumindest zwei zu verbindenden Elementen, die **dadurch gekennzeichnet ist, dass** sie im Wesentlichen besteht aus:

   - Herstellen zumindest eines thixotropen Stranges aus der nichtflüssigen elastomeren Silikon-Zusammensetzung, die durch Polyaddition vernetzbar ist und der Fluorharz zugesetzt ist, die durch einen der Ansprüche 1 bis 7 definiert ist, und/oder aus dem System gemäß Anspruch 8,
   - Aufbringen des Strangs auf eine Kontaktzone der zu assemblierenden Elemente,
   - dafür sorgen, dass die Vernetzung des den Strang bildenden Elastomers stattfindet, vorzugsweise durch Erhitzen,
   - und Zusammenfügen der Elemente, indem sie eines gegen das andere zumindest an der den Strang umfassenden Kontaktzone zusammengebracht werden.

12. Verwendung gemäß Anspruch 9 zur Realisierung von:

   - Dichtungen, die mit der Hilfe von Einspritzvorrichtungen injiziert werden, die Formen umfassen, in denen das Elastomer in der Hitze vernetzt,
   - oder Dichtungen, die mit Hilfe von Extrudern extrudiert sind, an deren Ausgang das Elastomer durch Hitze vernetzt.

13. Durch Verwendung gemäß einem der Ansprüche 9 bis 12 erhaltene Dichtung aus einer nichtflüssigen elastomeren Silikon-Zusammensetzung, die durch Polyaddition vernetzbar ist, und der Fluorharz zugesetzt ist, wie in einem der Ansprüche 1 bis 7 definiert und/oder aus dem System gemäß Anspruch 8.

14. Verfahren zur Montage zumindest zweier Elemente, **dadurch gekennzeichnet, dass** es im Wesentlichen besteht aus:

   ❖ Bestreichen zumindest eines der zusammenzusetzenden Elemente mit einer Schicht einer nichtflüssigen elastomeren Silikon-Zusammensetzung, die durch Polyaddition vernetzbar ist, und der Fluorharz zugesetzt ist, derjenigen Art, die Polyorganosiloxan (POS), welches $C_2$ - $C_6$ ≡Si-Alkenyl-Motive und ≡Si-H-Motive trägt, umfasst, wobei die Zusammensetzung als Klebstoff aufbringbar ist,
   ❖ Zusammensetzung der Elemente, indem sie eines gegen das andere gesetzt werden,
   ❖ dafür sorgen, dass der elastomere Klebstoff vernetzt, vorzugsweise durch Hitze;

und **dadurch gekennzeichnet, dass** das Fluorharz ein Fluorharz auf Basis von Polyfluorolefin (PFO), Polyfluorethylen (PFE), Vinylpolyfluorid, Vinylidenpolyfluorid, Polytetrafluorethylen (PTFE), Polymonochlortrifluorethylen, Polyfluorpolyether, Copolymer aus Ethylen und Tetrafluorethylen, Copolymer aus Tetrafluorethylen und Perfluorvinylether oder Copolymer aus Perfluorethylen und Perfluorpropylen ist, vorzugsweise auf Basis von Polytetrafluorethylen (PTFE) ist und verwendet wird als thixotropes Mittel in der besagten elastomeren Silikon-Zusammensetzung, um der Zusammensetzung eine nichtflüssige viskoelastische Eigenschaft zu verleihen.

15. Verfahren gemäß Anspruch 14, **dadurch gekennzeichnet, dass** eines der zusammenzusetzenden Elemente ein faserhaltiges Material, Gewebematerial, Strickmaterial, oder Nichtgewebematerial auf Basis von natürlichen oder synthetischen Fasern ist.